(19) Europäisches Patentamt / European Patent Office / Office européen des brevets

(11) **EP 4 389 785 B1**

(12) **EUROPEAN PATENT SPECIFICATION**

(45) Date of publication and mention
of the grant of the patent:
**04.02.2026 Bulletin 2026/06**

(21) Application number: **22912012.6**

(22) Date of filing: **23.12.2022**

(51) International Patent Classification (IPC):
**C08F 210/02** (2006.01)     **C08F 218/06** (2006.01)
**C08F 8/12** (2006.01)     **C08F 6/26** (2006.01)
**C08F 6/28** (2006.01)     **C08F 216/06** (2006.01)
**C08F 218/08** (2006.01)

(52) Cooperative Patent Classification (CPC):
(C-Sets available)
**C08F 6/28; C08F 8/12; C08F 216/06; C08F 218/08;**
Y02P 20/54                                    (Cont.)

(86) International application number:
**PCT/KR2022/021154**

(87) International publication number:
**WO 2023/121379 (29.06.2023 Gazette 2023/26)**

(54) **PREPARATION METHOD FOR ETHYLENE-VINYL ALCOHOL COPOLYMER**

VERFAHREN ZUR HERSTELLUNG VON ETHYLEN-VINYLALKOHOL-COPOLYMER

PROCÉDÉ DE PRÉPARATION D'UN COPOLYMÈRE D'ÉTHYLÈNE-ALCOOL VINYLIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.12.2021 KR 20210185641**
**22.12.2022 KR 20220182255**

(43) Date of publication of application:
**26.06.2024 Bulletin 2024/26**

(73) Proprietor: **LG Chem, Ltd.**
**Yeongdeungpo-gu**
**Seoul 07336 (KR)**

(72) Inventors:
• **KIM, Bongjune**
**Daejeon 34122 (KR)**
• **BAEK, Se Won**
**Daejeon 34122 (KR)**
• **BAE, Hyojin**
**Daejeon 34122 (KR)**
• **SONG, Sungjin**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
KR-A- 20030 068 867     KR-B1- 100 236 896
US-A1- 2006 258 803     US-A1- 2006 258 803
US-A1- 2016 030 625     US-A1- 2020 087 479

• JINHYUN KIM ET AL: "Removal of residual solvent of Paclitaxel using supercritical carbon dioxide", KOREAN JOURNAL BIOTECHNOLOGY BIOENGINEERING, KR, vol. 16, no. 13, 1 January 2001 (2001-01-01), pages 233 - 236, XP009547362, ISSN: 1225-7117
• JINHYUN KIM ET AL.: "Removal of residual solvent of Paclitaxel using supercritical carbon dioxide", KOREAN JOURNAL BIOTECHNOLOGY BIOENGINEERING, vol. 16, no. 13, 1 January 2001 (2001-01-01), KR
, pages 233 - 236, XP009547362, ISSN: 1225-7117

**(Cont. next page)**

(52) Cooperative Patent Classification (CPC): (Cont.)

C-Sets
**C08F 6/28, C08L 23/0861;**
**C08F 8/12, C08F 218/08;**
**C08F 216/06, C08F 210/02;**
**C08F 218/08, C08F 210/02**

**Description**

[TECHNICAL FIELD]

The present disclosure relates to a preparation method for an ethylene-vinyl alcohol copolymer.

[BACKGROUND]

An ethylene-vinyl alcohol copolymer (EVOH) is widely used as a material for films, sheets, containers, etc. due to its excellent gas barrier properties against oxygen, transparency, oil resistance, antistatic property, and mechanical strength.

The EVOH may be prepared by a saponification reaction of an ethylene-vinyl acetate copolymer (EVAc) prepared by copolymerization of ethylene and vinyl acetate. As a catalyst for the saponification reaction of EVAc, alkali catalysts such as sodium hydroxide, potassium hydroxide, and alkali metal alcoholates are mainly used, as shown in US2006258803.

Since EVOH exhibits better gas barrier properties as the degree of saponification increases, EVOH used for food packaging, and the like preferably has a high degree of saponification of 99% or more. In order to achieve such a high degree of saponification, a method of performing the saponification reaction at a higher temperature or increasing the amount of alkali catalyst used has been conventionally used.

However, in the case of a high-temperature reaction, side reactions are likely to occur. And, when a large amount of an alkali catalyst is used, there is a problem in that the amount of catalyst by-products in the saponified product increases. The catalyst by-products cause discoloration of EVOH, so a washing process is followed to remove them after the saponification reaction. When the content of catalyst by-products is high, an excessive washing process is required, thereby reducing process efficiency and generating excessive wastewater.

In particular, as a process of removing catalyst by-products (Na component, etc.), reaction by-products (Methyl acetate, MeAc, etc.), residual alcohol solvent (methanol/MeOH, etc.) other than EVOH from the EVOH solution after the saponification reaction of the ethylene-vinyl acetate copolymer (EVAc), a process of obtaining EVOH solids by washing EVOH with water after a dealcoholization process, followed by drying has been conventionally known. Herein, the dealcoholization process is to remove alcohol solvents (MeOH, etc.) using steam in a multi-stage distillation column, and excessive steam is required and waste liquid containing alcohol and water is excessively generated. In addition, when EVOH is washed with water, residues in the EVOH are removed using a mixing process with water, which requires an excessive amount of water and generates an excessive amount of waste liquid. And the following problems occur: a multi-stage distillation column is required in this process, a pipe mixer and a water tank are required for washing with water, and the entire process is complicated.

Furthermore, when recycling the alcohol solvent recovered through the dealcoholization process to the saponification reaction, there is a problem in that a process of additionally separating or removing water used in the dealcoholization process should be performed.

Accordingly, a multi-stage distillation column is required in the washing process, or a pipe mixer and a water tank are required for washing with water, thereby complicating the process, and greatly reducing the efficiency of the entire process for preparing the ethylene-vinyl alcohol copolymer.

[DETAILED DESCRIPTION OF THE INVENTION]

[Technical Problem]

In the present disclosure, there is provided a preparation method for an ethylene-vinyl alcohol copolymer capable of efficiently obtaining an ethylene-vinyl alcohol copolymer having a high degree of saponification without complicated processes such as a multi-stage distillation column or a pipe mixer and a water tank for washing with water.

[Technical Solution]

According to one embodiment of the present disclosure, there is provided a method for preparing an ethylene-vinyl alcohol copolymer, including:

performing a saponification reaction of reacting an ethylene-vinyl acetate copolymer in the presence of an alkali catalyst to produce an ethylene-vinyl alcohol copolymer; and
extracting an alcohol solvent contained in a saponification reaction product under a supercritical carbon dioxide condition;

wherein in the supercritical carbon dioxide condition, $CO_2$ has a pressure of 80 bar or more to 150 bar or less, and a temperature of 40°C or more to 60 °C or less.

[ADVANTAGEOUS EFFECTS]

According to the present disclosure, after a saponification reaction of an ethylene-vinyl acetate copolymer in the presence of an alkali catalyst, a supercritical extraction process is performed under optimized conditions, so that an ethylene-vinyl alcohol copolymer having a high degree of saponification can be efficiently obtained without deterioration in physical properties of the ethylene-vinyl acetate copolymer and complicated equipment such as a multi-stage distillation column, or a pipe mixer and a water tank while minimizing the generation of waste liquid.

Therefore, the efficiency of a washing process for removing catalyst by-products contained in the ethylene-vinyl alcohol copolymer after the saponification process can be increased without deteriorating physical properties of the ethylene-vinyl acetate copolymer, and the amount of wastewater generated in the washing process can be minimized.

[DETAILED DESCRIPTION OF THE EMBODIMENTS]

The terminology used herein is for the purpose of describing particular embodiments only and is not intended to be limiting of the invention. The singular forms are intended to include the plural forms as well, unless the context clearly indicates otherwise. It will be further understood that the terms "include", "have", or "possess" when used in this specification, specify the presence of stated features, steps, components, or combinations thereof, but do not preclude the presence or addition of one or more other features, steps, components, or combinations thereof.

As the present invention can be variously modified and have various forms, specific embodiments thereof are shown by way of examples and will be described in detail.

Hereinafter, various embodiments of the present invention will be described in detail.

The method for preparing an ethylene-vinyl alcohol copolymer of the present disclosure includes:

performing a saponification reaction of reacting an ethylene-vinyl acetate copolymer in the presence of an alkali catalyst to produce an ethylene-vinyl alcohol copolymer; and
extracting an alcohol solvent contained in a saponification reaction product under a supercritical carbon dioxide condition.

Specifically, in the supercritical carbon dioxide condition, $CO_2$ has a pressure of 80 bar or more to 150 bar or less, and a temperature of 40 °C or more to 60 °C or less.

In particular, the present disclosure performs a supercritical extraction process, in which an alcohol solvent is extracted under a supercritical carbon dioxide condition, under optimized conditions after saponifying an ethylene-vinyl acetate copolymer in the presence of an alkali catalyst. Accordingly, an ethylene-vinyl alcohol copolymer can be efficiently obtained by minimizing the generation of waste liquid and effectively removing by-products such as catalyst residues without deterioration in physical properties of the ethylene-vinyl acetate copolymer and complicated equipment such as a multi-stage distillation column, or a pipe mixer and a water tank.

In general, the preparation process of the ethylene-vinyl alcohol copolymer includes a process of polymerizing an ethylene-vinyl acetate copolymer (EVA) (step 1), a process of producing EVOH by a saponification reaction using an alkali catalyst (step 2), and a process of dealcoholizing and washing an EVOH solution (EVOH + MeOH) (step 3), followed by a process of pelletization and drying (step 4).

Herein, after completing the above-mentioned dealcoholization and washing process (step 3), most of the alcohol component (MeOH) of EVOH is removed and replaced with water, thereby producing "hydrous EVOH". The hydrous EVOH may be subjected to a process of adding an additive such as carboxylic acid. That is, an additive such as carboxylic acid may be added during the dealcoholization and washing process (step 3), or a process of separately adding an additive such as carboxylic acid may be introduced prior to the process of pelletizing and drying the "hydrous EVOH" (step 4) obtained after the dealcoholization and washing process (step 3). Among the existing preparation process of the ethylene-vinyl alcohol copolymer, the drying process refers to a process of reducing the moisture content in the "hydrous EVOH" as described above.

In the present disclosure, the EVOH solution obtained after the saponification reaction (step 2) using the alkali catalyst is subjected to a dealcoholization process to remove the alcohol solvent from the saponification reaction product through an extraction process under a supercritical carbon dioxide condition instead of the conventional dealcoholization and washing process (step 3).

In the preparation method for an ethylene-vinyl alcohol copolymer of the present disclosure, a specific saponification reaction process and a supercritical extraction process will be described in detail below.

## Saponification reaction process

First, in the present disclosure, an ethylene-vinyl alcohol copolymer may be produced by a saponification reaction in which an ethylene-vinyl acetate copolymer is reacted in the presence of an alkali catalyst.

Specifically, the saponification reaction is performed by adding an alkali catalyst solution dropwise to the ethylene-vinyl acetate copolymer dispersed in an alcohol solvent. Preferably, the saponification reaction of the ethylene-vinyl acetate copolymer (EVAc) is carried out in two steps, and the alkali catalyst may be continuously added dropwise in each step, rather than added at once. At this time, the 'dropwise addition' means that the solution is added dropwise.

When the alkali catalyst is continuously added dropwise, an ethylene-vinyl alcohol copolymer having a high degree of saponification can be obtained even with a small amount of the catalyst compared to the case where the catalyst is added at once. Accordingly, a washing process for removing alkali catalyst by-products contained in the ethylene-vinyl alcohol copolymer produced after the saponification reaction can be simplified, thereby increasing the efficiency and economic feasibility of the process and minimizing the amount of wastewater generated.

In the present disclosure, the ethylene-vinyl acetate copolymer, which is a reactive material, may be prepared using a commercially available product or by copolymerizing ethylene and vinyl acetate monomers.

The ethylene-vinyl acetate copolymer may be prepared by copolymerization with further including a monomer copolymerizable therewith in addition to ethylene and vinyl acetate. Examples of such a monomer include $\alpha$-olefins such as propylene, isobutylene, $\alpha$-octene, and $\alpha$-dodecene; unsaturated acids such as acrylic acid, methacrylic acid, crotonic acid, maleic acid, and itaconic acid, salts thereof, anhydrides thereof, or alkyl- or dialkyl esters thereof; nitriles such as acrylonitrile and methacrylonitrile; amides such as acrylamide and methacrylamide; olefinsulfonic acids such as ethylenesulfonic acid, allylsulfonic acid, and metaallylsulfonic acid, or salts thereof; vinyl-based monomers such as alkyl vinyl ethers, vinyl ketone, N-vinylpyrrolidone, vinyl chloride, and vinylidene chloride; and the like.

The ethylene content of the ethylene-vinyl acetate copolymer may be appropriately adjusted according to the desired physical properties of the ethylene-vinyl alcohol copolymer. In one embodiment, the ethylene content of the ethylene-vinyl acetate copolymer may be 20 mol% or more, 25 mol% or more, or 30 mol% or more, and 40 mol% or less, 35 mol% or less, or 33 mol% or less. When the ethylene content of the ethylene-vinyl acetate copolymer satisfies the above range, the prepared ethylene-vinyl alcohol may have excellent gas barrier properties while exhibiting high processability. Meanwhile, the ethylene content may be calculated by a peak integral number ratio of $^1$H-NMR data of the ethylene-vinyl acetate copolymer.

The weight average molecular weight of the ethylene-vinyl acetate copolymer is not particularly limited, but for example, 8000 g/mol or more, 10000 g/mol or more, 12000 g/mol or more, 20000 g/mol or more, 50000 g/mol or more, 100000 g/mol or more, 150000 g/mol or more, 180000 g/mol or more, 200000 g/mol or more, or 220000 g/mol or more, and 290000 g/mol or less, 270000 g/mol or less, 260000 g/mol or less, 240000 g/mol or less, 200000 g/mol or less, 150000 g/mol or less, 100000 g/mol or less, 80000 g/mol or less, 50000 g/mol or less, 30000 g/mol or less, 25000 g/mol or less, 20000 g/mol or less, or 18000 g/mol or less. The weight average molecular weight of the ethylene-vinyl alcohol copolymer obtained by performing saponification on the ethylene-vinyl acetate copolymer satisfying the above weight average molecular weight may be 120000 g/mol or more, 130000 g/mol or more, or 140000 g/mol or more, and 180000 g/mol or less, 170000 g/mol or less, or 160000 g/mol or less. The weight average molecular weight of the ethylene-vinyl acetate copolymer and the ethylene-vinyl alcohol copolymer may be measured by a styrene calibration method using gel permeation chromatography (GPC).

As the alcohol solvent, a solvent commonly used in the saponification reaction of an ethylene-vinyl acetate copolymer may be used without limitation. For example, a lower alcohol solvent such as methanol, ethanol, propanol, isopropanol, or butanol may be used, and methanol is preferred.

The alkali catalyst may be at least one selected from the group consisting of alkali metal hydroxides or alcoholates such as sodium hydroxide, potassium hydroxide, sodium methoxide, potassium methoxide, sodium methylate, sodium ethylate, potassium methylate, and lithium methylate, and sodium hydroxide or potassium hydroxide can be preferably used in terms of ease of storage and handling of the catalyst (in the case of sodium methoxide, it is necessary to block air contact, a glove box is required when handling, and the catalyst is denatured when exposed to air).

Specifically, the saponification reaction of the ethylene-vinyl acetate copolymer (EVAc) is divided into two steps, and the alkali catalyst solution is continuously added dropwise in each step, rather than added at once.

For example, the saponification reaction of the ethylene-vinyl acetate copolymer (EVAc) may include a first saponification reaction step of adding a first alkali catalyst dropwise to the ethylene-vinyl acetate copolymer dispersed in an alcohol solvent; and a second saponification reaction step of adding a second alkali catalyst dropwise to the first saponification reaction mixture.

The first saponification reaction step and the second saponification reaction step may be performed consecutively. That is, immediately after the completion of the first saponification reaction step, the second alkali catalyst solution may be added dropwise to the reaction mixture to proceed the second saponification reaction.

In addition, the first alkali catalyst and the second alkali catalyst may be the same as or different from each other, and preferably, the same material may be used as the first alkali catalyst and the second alkali catalyst.

The total amount of the alkali catalyst used may be 0.01 mole or more, or 0.015 moles or more, and less than 0.03 moles, or 0.02 moles or less based on 1 mole of vinyl acetate unit of the ethylene-vinyl acetate copolymer.

In order to prepare an ethylene-vinyl alcohol copolymer having a high degree of saponification by the conventional method, 0.03 moles or more of an alkali catalyst was required for 1 mole of vinyl acetate unit. However, according to the present method, it is possible to prepare an ethylene-vinyl alcohol copolymer having a high degree of saponification while reducing the amount of the alkali catalyst used. When the total amount of the alkali catalyst used is too small, such as less than 0.01 mole, the saponification reaction may be too slow, so it is preferable to satisfy the amount of the catalyst used.

In addition, within the range satisfying the total amount, the first alkali catalyst and the second alkali catalyst may each be used in an amount of 0.0025 moles or more, or 0.005 moles or more, and 0.02 moles or less, or 0.01 mole or less based on 1 mole of the vinyl acetate unit of the ethylene-vinyl acetate copolymer.

The first alkali catalyst and the second alkali catalyst may be used in a molar ratio of 1:1 to 1:4 or 1:1 to 1:2. An ethylene-vinyl alcohol copolymer having a higher degree of saponification can be prepared by making the amount of the second alkali catalyst equal to or greater than the amount of the first alkali catalyst.

Meanwhile, the alkali catalyst, for example, the first alkali catalyst and the second alkali catalyst are added dropwise to the ethylene-vinyl acetate copolymer dispersion in the form of a solution. At this time, the above-described alcohol solvent may be used as the solvent, and it is preferable to use the same solvent used in preparing the ethylene-vinyl acetate copolymer dispersion. A concentration of each alkali catalyst solution may be the same or different from each other, may be adjusted depending on the concentration of the ethylene-vinyl acetate copolymer dispersion and the desired dropping rate of the alkali catalyst solution.

For example, in the first saponification reaction step, a dispersion is first prepared by dispersing an ethylene-vinyl acetate copolymer in an alcohol solvent, and a first alkali catalyst is added dropwise thereto to proceed the saponification reaction.

The amount of the alcohol solvent used to prepare the ethylene-vinyl acetate copolymer dispersion may be appropriately adjusted depending on the type of alcohol solvent, the type of ethylene-vinyl acetate copolymer, the concentration of alkali catalyst solution, and the like. For example, the alcohol solvent may be used in an amount of 100 parts by weight to 1000 parts by weight, 200 parts by weight or more, or 300 parts by weight or more, and 800 parts by weight or less, 700 parts by weight or less, or 500 parts by weight or less based on 100 parts by weight of the ethylene-vinyl acetate copolymer, but the present disclosure is not limited thereto.

Meanwhile, the dropping rate of the alkali catalyst solution may be adjusted according to the reaction time in the saponification reaction process. For example, the alkali catalyst solution may be added dropwise so that the amount of alkali catalyst added per minute is $1.0*10^{-5}$ mole to $13*10^{-5}$ moles based on 1 mole of vinyl acetate unit of the ethylene-vinyl acetate copolymer. When the above-described dropping rate is satisfied, an ethylene-vinyl alcohol copolymer having a high degree of saponification can be prepared by improving the reaction efficiency without excessively lengthening the saponification reaction time.

From this point of view, the alkali catalyst solution may preferably be added dropwise so that the amount of alkali catalyst added per minute is $2.0*10^{-5}$ moles or more, $3.0*10^{-5}$ moles or more, or $4.0*10^{-5}$ moles or more, and $11.0*10^{-5}$ moles or less, $10.0*10^{-5}$ moles or less, or $9.0*10^{-5}$ moles or less based on 1 mole of vinyl acetate unit of the ethylene-vinyl acetate copolymer.

For example, the dropwise addition of the first alkali catalyst solution is preferably performed so that the amount of the first alkali catalyst added per minute is $1.0*10^{-5}$ mole or more, $2.0*10^{-5}$ moles or more, $3.0*10^{-5}$ moles or more, or $4.0*10^{-5}$ moles or more, and $13*10^{-5}$ moles or less, $11.0*10^{-5}$ moles or less, $10.0*10^{-5}$ moles or less, or $9.0*10^{-5}$ moles or less based on 1 mole of vinyl acetate unit of the ethylene-vinyl acetate copolymer.

For example, the dropwise addition of the second alkali catalyst solution is preferably performed so that the amount of the second alkali catalyst added per minute is $2.0*10^{-5}$ moles or more, $3.0*10^{-5}$ moles or more, or $4.0*10^{-5}$ moles or more, and $8.0*10^{-5}$ moles or less, $7.0*10^{-5}$ moles or less, or $6.0*10^{-5}$ moles or less based on 1 mole of vinyl acetate unit of the ethylene-vinyl acetate copolymer.

As long as the above range is satisfied, the dropping rate of the second alkali catalyst solution may be equal to or higher than the dropping rate of the first alkali catalyst solution. In this case, the reaction efficiency is increased, and thus an ethylene-vinyl alcohol copolymer having a high degree of saponification can be obtained, which is preferable.

Meanwhile, a temperature of the saponification reaction may be 40 °C or higher, 50 °C or higher, or 60 °C or higher, and 120 °C or lower, 110 °C or lower, or 100 °C or lower. When the reaction temperature is less than 40 °C, the saponification reaction rate may be excessively slow, and when the reaction temperature exceeds 120 °C, side reactions easily occur, so it is preferable that the above range is satisfied.

For example, the temperature of the first saponification step is preferably 40 °C or higher, 50 °C or higher, or 60 °C or higher, and 120 °C or lower, 110 °C or lower, or 100 °C or lower.

For example, the temperature of the second saponification step is preferably 60 °C or higher, 70 °C or higher, or 80 °C or higher, and 120 °C or lower, 110 °C or lower, or 100 °C or lower.

As long as the above range is satisfied, the temperature of the second saponification reaction step may be equal to or higher than the temperature of the first saponification reaction step. In this case, the reaction efficiency is increased, and thus an ethylene-vinyl alcohol copolymer having a high degree of saponification can be obtained, which is preferable.

Meanwhile, a pressure of the saponification reaction process may be 1 bar or more, and 5 bar or less, 4.5 bar or less, 4 bar or less, 3.5 bar or less, 3.2 bar or less, or 3 bar or less. When the reaction pressure is less than 1 bar, the saponification reaction rate may be excessively slow. In actual process implementation, it can be performed at 5 bar or less in terms of reducing equipment costs and securing process safety.

For example, the pressure in the first saponification reaction step may be 1 bar or more, and 2.5 bar or less, 2 bar or less, 1.8 bar or less, 1.5 bar or less, or 1.2 bar or less.

In addition, the pressure of the second saponification reaction step may be 1 bar or more, 1.2 bar or more, 1.5 bar or more, 2 bar or more, 2.8 bar or more, or 2.5 bar or more, and 5 bar or less, 4.5 bar or less, 4 bar or less, 3.2 bar or less, or 3 bar or less.

In addition, the temperature of the second saponification reaction step is preferably 60 °C or higher, 70 °C or higher, or 80 °C or higher, and 120 °C or lower, 110 °C or lower, or 100 °C or lower.

As long as the above range is satisfied, the pressure of the second saponification reaction step may be equal to or higher than the pressure of the first saponification reaction step. In this case, the reaction efficiency is increased, and thus an ethylene-vinyl alcohol copolymer having a high degree of saponification can be obtained, which is preferable.

Meanwhile, the saponification reaction may be performed under an inert gas atmosphere, and the reaction may proceed while continuously discharging methyl acetate, which is a by-product, out of the system to increase the conversion rate.

For example, the first saponification reaction step may be terminated at the time when the dropwise addition of the first alkali catalyst solution is completed. In other words, the dropwise addition of the first alkali catalyst solution may be continuously performed from the start to the end of the first saponification reaction. When adding the first alkali catalyst solution dropwise throughout the reaction time, the conversion rate of EVAc to EVOH may be increased while minimizing side reactions.

After completion of the first saponification reaction, a second alkali catalyst solution prepared separately is added dropwise to the reaction mixture to perform a second saponification reaction.

The first saponification reaction step and the second saponification reaction step may be performed consecutively. That is, immediately after the completion of the first saponification reaction step, the second alkali catalyst solution may be added dropwise to the reaction mixture to proceed the second saponification reaction.

Similar to the first saponification reaction step, the second saponification reaction step may be terminated at the time when the dropwise addition of the second alkali catalyst solution is completed. That is, the dropwise addition of the second alkali catalyst solution may be continuously performed from the start to the end of the second saponification reaction. When adding the second alkali catalyst solution dropwise throughout the reaction time, the conversion rate of EVAc to EVOH may be increased while minimizing side reactions.

According to the above preparation method, an ethylene-vinyl alcohol copolymer having a high degree of saponification of 99% or more can be obtained by using a smaller amount of an alkali catalyst compared to the conventional batch-type saponification process of an ethylene-vinyl acetate copolymer. Since the ethylene-vinyl alcohol copolymer exhibits excellent gas barrier properties due to its high degree of saponification, it can be usefully used for food packaging.

Specifically, the ethylene-vinyl alcohol copolymer prepared according to the above method may have the degree of saponification of 99% or more, or 99% to 99.9%; the ethylene content of 20 mol% or more, 25 mol% or more, 27 mol% or more, or 30 mol% or more, and 60 mol% or less, 50 mol% or less, 48 mol% or less, or 35 mol% or less; and the weight average molecular weight of 120000 g/mol or more, 130000 g/mol or more, or 140000 g/mol or more, and 180000 g/mol or less, 170000 g/mol or less, or 160000 g/mol or less. Such an ethylene-vinyl alcohol copolymer may exhibit excellent moldability and gas barrier properties.

For example, the degree of saponification of the ethylene-vinyl alcohol copolymer can be calculated by a peak integral number ratio of $^1$H-NMR data. The specific measurement method is as shown in Test Example.

In addition, the ethylene-vinyl alcohol copolymer may exhibit excellent color characteristics by satisfying a yellowness index (YI) of 13 or less, 12 or less, 11 or less, 10 or less, 9.8 or less, 9.5 or less, 9 or less, 8.9 or less, 8.5 or less, 8.2 or less, 8 or less, or 7.9 or less.

For example, the yellowness index of the ethylene-vinyl alcohol copolymer can be measured using a color difference meter (UltraScan VIS, manufactured by Hunterlab). The specific measurement method is as shown in Test Example.

**Supercritical extraction process**

In the method for preparing an ethylene-vinyl alcohol copolymer of the present disclosure, a supercritical extraction process is performed under optimized conditions on the ethylene-vinyl alcohol copolymer obtained through the above-described saponification reaction to effectively remove by-products such as an alcohol solvent, and a post-treatment process such as an immersion process using a carboxylic acid-containing aqueous solution can be immediately performed without an additional washing process.

Particularly, the present disclosure is characterized in that the alcohol solvent contained in the saponification reaction product is subjected to an extraction process under a supercritical carbon dioxide condition instead of performing the dealcoholization and washing process on the ethylene-vinyl alcohol copolymer obtained through the saponification reaction using the above-mentioned alkali catalyst.

Specifically, in the present disclosure, after performing the above-described saponification reaction, the saponification reaction product including the ethylene-vinyl alcohol copolymer may be introduced into a supercritical extractor and $CO_2$ may be injected to extract alcohol.

This supercritical extraction process is not used to remove water from hydrated polymers or compounds with excess water ($H_2O$), and it is difficult to apply it to the process of drying "hydrous EVOH" in the previously known process for preparing an ethylene-vinyl alcohol copolymer. In particular, the supercritical $CO_2$ fluid goes through a supercritical extractor, and is finally recondensed and cooled to return to a liquefied state. When the water is excessive, the water that is not 100% condensed in the separator flows into the $CO_2$ supercritical equipment line and is frozen by the cooled $CO_2$. This blocks the line and generates abnormal high pressure, which causes high pressure explosion and equipment failure, so it is difficult to use it in the drying process for reducing the moisture content of "hydrous EVOH".

In the extraction step of the present disclosure, the supercritical carbon dioxide condition corresponds to the critical temperature and pressure at which $CO_2$ becomes supercritical. Specifically, in order to effectively remove catalyst by-products contained in the ethylene-vinyl alcohol copolymer after the saponification process without deteriorating physical properties of the ethylene-vinyl alcohol copolymer, and to increase the recovery rate of the alcohol solvent, $CO_2$ has the pressure of 80 bar or more to 150 bar or less, and the temperature of 40 °C or more to 60 °C or less.

Specifically, the pressure of $CO_2$ injected into the supercritical extractor is 80 bar or more in terms of increasing an extraction efficiency of alcohol solvent. More specifically, it may be 85 bar or more, more specifically 90 bar or more, 95 bar or more, 98 bar or more, 100 bar or more, 105 bar or more, 110 bar or more, 115 bar or more, or 120 bar or more. However, in terms of preventing degradation of physical properties of the ethylene-vinyl alcohol copolymer, it may be 150 bar or less, more specifically 148 bar or less, 145 bar or less, 143 bar or less, or 140 bar or less. In addition, the temperature of the supercritical extraction process may be 40 °C or higher, more specifically 42 °C or higher, 43 °C or higher, or 45 °C or higher in terms of increasing the extraction efficiency of alcohol solvent. However, it may be 60 °C or less, more specifically 55 °C or less, 53 °C or less, or 52 °C or less in terms of preventing the degradation of physical properties of the ethylene-vinyl alcohol copolymer. Herein, when the pressure and temperature of $CO_2$ are too high, the $CO_2$ flow rate at the rear part of the extractor increases correspondingly, and problems such as an increase in capacity of a device like a separator and the corresponding increase in cooling and heating energy may occur.

Specifically, a step of gelling or solidifying a resultant of the saponification reaction containing the ethylene-vinyl alcohol copolymer from the saponification reaction mixture may be further included before the supercritical extraction step.

For example, the preparation method for an ethylene-vinyl alcohol copolymer may include a saponification reaction step of reacting an ethylene-vinyl acetate copolymer in the presence of an alkali catalyst to produce an ethylene-vinyl alcohol copolymer;

a step of gelling or solidifying a resultant of the saponification reaction containing the ethylene-vinyl alcohol copolymer from the saponification reaction mixture; and
a supercritical extraction step of introducing a gelled or solidified saponification reaction product containing the ethylene-vinyl alcohol copolymer into a supercritical extractor and injecting $CO_2$ to extract alcohol.

Wherein in the supercritical carbon dioxide condition, $CO_2$ has a pressure of 80 bar or more to 150 bar or less and a temperature of 40 °C or more to 60 °C, and specific supercritical carbon dioxide conditions are as described above.

At this time, the gelation or solidification may be performed by cooling to about 5 °C or less, or about -10 °C or more to about 5 °C or less during or after recovering the saponification reaction product. For example, a method of line cooling to about 5 °C or less or about -10 °C or more to about 5 °C or less in a transfer pipe during recovering the saponification reaction product may be applied to discharge it in the form of a strand. Alternatively, a gelation or solidification in the form of a cake may be applied by cooling the saponified reaction product at about 5 °C or less or at about -10 °C or more to about 5 °C or less for about 3 hours or more to about 12 hours or less after recovering the saponification reaction product. For example, the strand may have a cylindrical shape, and the cake may have a rectangular parallelepiped shape. However, in terms of increasing the extraction efficiency of alcohol solvent, it is preferable to extract the alcohol solvent under a supercritical carbon dioxide condition after cooling the saponification reaction product to about -10 °C or more to about 5 °C or less for gelation or solidification in the form of a strand.

Specifically, in performing the supercritical extraction step, the saponification reaction product may have an external surface area per volume of about 5 $cm^2/cm^3$ or more, or about 5 $cm^2/cm^3$ or more to about 50 $cm^2/cm^3$ or less. More specifically, the external surface area per volume of the saponification reaction product may be about 5 $cm^2/cm^3$ or more, about 6 $cm^2/cm^3$ or more, about 8 $cm^2/cm^3$ or more, about 9 $cm^2/cm^3$ or more, about 10 $cm^2/cm^3$ or more, about 11 $cm^2/cm^3$ or more, about 12 $cm^2/cm^3$ or more, or about 13 $cm^2/cm^3$ or more. However, considering the actual process efficiency of the gelation or solidification, it may be about 45 $cm^2/cm^3$ or less, about 40 $cm^2/cm^3$ or less, about 35 $cm^2/cm^3$ or less, about 30 $cm^2/cm^3$ or less, about 28 $cm^2/cm^3$ or less, about 25 $cm^2/cm^3$ or less, about 22 $cm^2/cm^3$ or less, about 20 $cm^2/cm^3$ or less, about 18 $cm^2/cm^3$ or less, about 16 $cm^2/cm^3$ or less, or about 15 $cm^2/cm^3$ or less. In one example, the external surface area per volume of the saponification reaction product may be about 9 $cm^2/cm^3$ to about 20 $cm^2/cm^3$, about 10 $cm^2/cm^3$ to about 18 $cm^2/cm^3$, about 10 $cm^2/cm^3$ to about 15 $cm^2/cm^3$, or about 10 $cm^2/cm^3$ to about 12 $cm^2/cm^3$. The external surface area per volume of the saponification reaction product can be measured by various methods known to be capable of measuring the volume and external surface area of a polymer, and there is no particular limitation thereon. For example, when the saponification reaction product is in the form of a strand or a cake, the length, diameter, width, height, etc. measured in appearance are measured, and the volume and surface area can be calculated using these measurements.

Meanwhile, in the supercritical extraction process performed on the ethylene-vinyl alcohol copolymer obtained through the saponification reaction of the present disclosure, a step of filtering out the solid ethylene-vinyl alcohol copolymer from the extract discharged from the supercritical extractor into which $CO_2$ is injected may be further included. The filtering device is not limited as long as it is capable of filtering out the solid ethylene-vinyl alcohol copolymer, and may be, for example, a filter. The specifications of the filter are not particularly limited.

In addition, in one example of the present disclosure, a step of gas-liquid separation of the extract filtered through the filtering device using a separator may be further included.

The separator is a device for separating carbon dioxide and an alcohol solvent from the extract discharged from the supercritical extractor, and may be, for example, a gas-liquid separator including a flash separator or a multi-stage distiller.

The separator may, for example, separate and discharge carbon dioxide in a vapor phase through an upper part of the separator, and separate and discharge the alcohol solvent and other components in a liquid phase through a lower part of the separator. The carbon dioxide separated and discharged upwards may be condensed into a liquid phase in a subsequent process and recycled to the supercritical extractor, and the alcohol solvent discharged in a liquid phase may be reused as a raw material for the saponification process after going through a purification process. In addition, an additional gas-liquid separation process may be performed prior to the purification process.

Meanwhile, through the supercritical extraction process, the recovery rate of the alcohol solvent may be as high as 88 wt% or more, preferably 90 wt% or more, 92 wt% or more, 93 wt% or more, 95 wt% or more, 96 wt% or more, 97 wt% or more, 98 wt% or more, 98.5 wt% or more, 99 wt% or more, 99.5 wt% or more, or 99.9 wt% or more.

Specifically, the alcohol solvent recovery rate (%) in the supercritical extraction process after the saponification reaction was determined by measuring the weight of ethylene-vinyl alcohol copolymer (EVOH) before supercritical extraction (A), the weight of EVOH after supercritical extraction (B), and the weight of alcohol solvent recovered through supercritical extraction (C) in grams (g), and substituting them into Equation 1 below.

[Equation 1]

$$\text{Alcohol solvent recovery rate in supercritical extraction (\%)} = C / (A-B) \times 100$$

in Equation 1,

A is a weight (g) of ethylene-vinyl alcohol copolymer (EVOH) before supercritical extraction,
B is a weight (g) of ethylene-vinyl alcohol copolymer (EVOH) after supercritical extraction, and
C is a weight (g) of alcohol solvent recovered through supercritical extraction.

In addition, the product containing the ethylene-vinyl alcohol copolymer obtained after performing the supercritical extraction process may have an alcohol solvent content of 12 wt% or less, preferably 10 wt% or less, 8 wt% or less, 10 wt% or less, 8 wt% or less, 7 wt% or less, 5 wt% or less, 4 wt% or less, 3 wt% or less, 2 wt% or less, 1.5 wt% or less, 1 wt% or less, 0.5 wt% or less, or 0.1 wt% or less based on the total weight of the product. More preferably, the alcohol solvent may not be substantially detected in the ethylene-vinyl alcohol copolymer obtained after the extraction step and the product including the same.

Meanwhile, the removal rate of the alkaline component contained in the catalyst used for the saponification reaction through the supercritical extraction process may be 25% or more, preferably 26% or more, 27% or more, 28% or more, 29% or more, 30% or more, 31% or more, 33% or more, 35% or more, 40% or more, 45% or more, or 50% or more. Specifically, the removal rate (%) of the alkaline component was determined by measuring the alkaline component content (a) of the ethylene-vinyl alcohol copolymer (EVOH) before supercritical extraction and the alkaline component content (b) of the EVOH after extraction, and substituting them into Equation 2 below.

[Equation 2]

$$\text{Alkaline component removal rate (\%)} = 100 \times (1 - b/a)$$

in Equation 2,

a is a residual amount (ppm) of the catalytic alkaline component contained in the ethylene-vinyl alcohol copolymer (EVOH) before supercritical extraction, and
b is a residual amount (ppm) of the catalytic alkaline component contained in the ethylene-vinyl alcohol copolymer (EVOH) after supercritical extraction.

The residual amount (ppm) of the catalytic alkaline component contained in the ethylene-vinyl alcohol copolymer (EVOH) through the supercritical extraction process, that is, the residual amount (ppm) of the alkaline component contained in the catalyst used for the saponification reaction can be measured using inductively coupled plasma optical emission spectrometry (ICP-OES) under the following conditions.

-    Pre-treatment: microwave digestion, 250 °C, heating for 30 min, 250 °C, maintaining for 15 min (90 bar)
-    ICP-OES analysis conditions:

    RF power(W): 1300
    Plasma Gas Flow (L/min): 15
    Aux. Gas flow (L/min): 0.20
    Neb. Gas flow (L/min): 0.80
    Internal Standard: Sc

In addition, the residual amount of the alkaline component in the product containing the ethylene-vinyl alcohol copolymer obtained after performing the supercritical extraction step, that is, the residual amount of the alkaline component contained in the catalyst used for the saponification reaction may be 100000 ppm or less based on the total weight of the product, preferably 9000 ppm or less, 8700 ppm or less, 7000 ppm or less, 5000 ppm or less, 3000 ppm or less, 2500 ppm or less, 2200 ppm or less, 2100 ppm or less, 2000 ppm or less, 1500 ppm or less, 1000 ppm or less, 800 ppm or less, 500 ppm or less, 300 ppm or less, or 100 ppm or less. More preferably, in the ethylene-vinyl alcohol copolymer obtained after the extraction step and the product including the same, the alkaline component contained in the catalyst used for the saponification reaction may not be substantially detected.
For example, in the present disclosure, the ethylene-vinyl alcohol copolymer obtained through the above-described saponification reaction is placed in a supercritical extractor and the following process is repeated three or more times to perform a supercritical extraction process for 120 minutes in total: after controlling the inside of the extractor to 50 °C and 150 bar by injecting $CO_2$, the temperature and pressure are maintained without additional $CO_2$ flow in a steady state for 20 minutes, and then $CO_2$ is continuously injected at a rate 6.5 L/min at 50 °C and 150 bar in a circulation state for another 20 minutes.
The supercritical extraction process according to the present disclosure effectively recovers an alcohol solvent such as methanol without using steam or water, so that the alcohol solvent can be reused for the saponification reaction without an additional process of separating water and the alcohol solvent, thereby greatly improving the overall process efficiency.
In particular, according to the present disclosure, when performing the supercritical extraction process under the pressure and temperature conditions as described above, it is possible to minimize the deterioration in physical properties of the ethylene-vinyl alcohol copolymer prepared by the saponification reaction.
Accordingly, the ethylene-vinyl alcohol copolymer obtained after the supercritical extraction process according to the present disclosure may have the degree of saponification of 99% or more, or 99% to 99.9%; the ethylene content of 20 mol% or more, 25 mol% or more, 27 mol% or more, or 30 mol% or more, and 60 mol% or less, 50 mol% or less, 48 mol% or less, or 35 mol% or less; and the weight average molecular weight of 120000 g/mol or more, 130000 g/mol or more, or 140000 g/mol or more, and 180000 g/mol or less, 170000 g/mol or less, or 160000 g/mol or less. In addition, the ethylene-vinyl alcohol copolymer may exhibit excellent color characteristics by satisfying a yellowness index (YI) of 13 or less, 12 or less, 11 or less, 10 or less, 9.8 or less, 9.5 or less, 9 or less, 8.9 or less, 8.5 or less, 8.2 or less, 8 or less, or 7.9 or less. Herein, the degree of saponification and the yellowness index of the ethylene-vinyl alcohol copolymer can be measured by the same method as described in the saponification reaction step, and the specific measurement method is as shown in Test Example.

**Post-treatment step**

Meanwhile, after performing the saponification reaction process and the supercritical extraction process in the method for preparing the ethylene-vinyl alcohol copolymer according to the present disclosure, a post-treatment step of immersing in an additive-containing aqueous solution, followed by drying may be additionally performed.

Specifically, after performing the supercritical extraction process, a step of immersing the ethylene-vinyl alcohol copolymer in an aqueous solution containing a carboxylic acid, and then drying to remove water may be further included.

For example, the preparation method for an ethylene-vinyl alcohol copolymer may include a saponification reaction step of reacting an ethylene-vinyl acetate copolymer in the presence of an alkali catalyst to produce an ethylene-vinyl alcohol copolymer;

an extraction step of extracting an alcohol solvent contained in the saponification reaction product under a supercritical carbon dioxide condition; and

a step of immersing the ethylene-vinyl alcohol copolymer in an aqueous solution containing a carboxylic acid, and then drying to remove water, after performing the supercritical extraction process.

As another example, the preparation method for an ethylene-vinyl alcohol copolymer may include a saponification reaction step of reacting an ethylene-vinyl acetate copolymer in the presence of an alkali catalyst to produce an ethylene-vinyl alcohol copolymer;

a step of gelling or solidifying a resultant of the saponification reaction containing the ethylene-vinyl alcohol copolymer from the saponification reaction mixture;

a step of extracting an alcohol solvent contained in a gelled or solidified saponification reaction product under a supercritical carbon dioxide condition; and

a step of immersing the ethylene-vinyl alcohol copolymer in an aqueous solution containing a carboxylic acid, and then drying to remove water, after performing the supercritical extraction process.

Wherein in the supercritical carbon dioxide condition, $CO_2$ has a pressure of 80 bar or more to 150 bar or less and a temperature of 40 °C or more to 60 °C, and specific supercritical carbon dioxide conditions are as described above.

Specifically, the carboxylic acid aqueous solution may include acetic acid.

**In** addition, a concentration of the aqueous solution containing a carboxylic acid may be 0.01 wt% to 1 wt%.

The immersion process may be performed 1 to 5 times at 20 °C to 50 °C for 10 minutes to 60 minutes each time.

For example, after performing the supercritical extraction process, the ethylene-vinyl alcohol copolymer may be immersed in an aqueous solution containing 0.01 wt% to 1 wt% of carboxylic acid 1 to 5 times for 10 minutes to 60 minutes each time, stirred, and then dried.

In addition, the step of drying to remove water after being immersed in the above-described aqueous solution containing a carboxylic acid may be performed for 3 hours to 50 hours at 40 °C to 100 °C, and the drying may be performed once or a plurality of times.

The drying process of the moisture may be performed so that the moisture content is less than 5%, less than 1%, more preferably less than 0.5%.

Hereinafter, the present invention will be described in more detail with the following preferred examples.

**Example 1**

**1-1. Saponification reaction**

A mixed solution (total solid content: 20%) containing 100 parts by weight of an ethylene-vinyl acetate copolymer (EVAc) with an ethylene content of 32 mol% and 400 parts by weight of methanol (MeOH) was placed in a saponification reactor, and 20 parts by weight of a methanol solution of sodium hydroxide (sodium hydroxide/vinyl acetate unit = 0.01/1, molar ratio) obtained by diluting 0.27 wt% of NaOH with respect to the EVAc solid contents in MeOH by 1% (16 g/L) was continuously added dropwise to the saponification reactor at 60 °C under normal pressure (about 1 bar) for 2.5 hours to perform a saponification reaction. At this time, the dropping rate was adjusted so that the number of moles of sodium hydroxide added per vinyl acetate unit of EVAc was $1.4 \times 10^{-6}$ moles per second. While the sodium hydroxide methanol solution (NaOH/MeOH solution) was continuously introduced into the reactor as described above, nitrogen gas was blown into the reactor. In addition, while removing methyl acetate, a by-product, out of the system together with methanol, a first saponification reaction (reactor temperature: 60 °C, reactor pressure: normal pressure, reaction time: 2.5 hours) was carried out.

In addition, 20 parts by weight of a methanol solution of sodium hydroxide (sodium hydroxide/vinyl acetate unit = 0.01/1, molar ratio) separately obtained by diluting 0.53 wt% of NaOH with respect to the EVAc solid contents in MeOH by 1% (16 g/L) was continuously added dropwise to the reactant for 3 hours in the saponification reactor, and a second saponification reaction was performed. At this time, the dropping rate was adjusted so that the number of moles of sodium hydroxide added per vinyl acetate unit of EVAc was $9.3 \times 10^{-7}$ moles per second. While the methanol solution of sodium hydroxide was continuously introduced into the reactor as described above, nitrogen gas was blown into the reactor. In addition, while removing methyl acetate, a by-product, out of the system together with methanol, a second saponification reaction (reactor temperature: 90 °C, reactor pressure: 3 bar, reaction time: 3 hours) was carried out.

After the addition of NaOH was completed in this way, the reaction was further conducted for 1 hour under the above-described condition (reactor temperature: 90 °C, reactor pressure: 3 bar).

Then, 120 parts by weight of an aqueous solution of acetic acid (acetic acid/sodium hydroxide = 1/1, molar ratio) having the same molar equivalent as NaOH (9 g/L) was added to the reaction mixture, followed by neutralization by stirring for 30 minutes. Thereafter, the reaction was stopped, and the reaction solution was concentrated to the total solid contents (TSC) of 15% to 20% at 60 °C to 70 °C. At this time, an EVOH methanol/water solution containing 60 parts by weight of ethylene-vinyl alcohol copolymer (EVOH), 120 parts by weight of methanol and 120 parts by weight of water was obtained. The EVOH solution was solidified by cooling to 5 °C during line transfer, and discharged in the form of an ethylene-vinyl alcohol strand (EVOH strand) having a cylindrical shape with a diameter of about 2 mm. At this time, an external surface area per volume of the ethylene-vinyl alcohol strand (EVOH strand) was 10 $cm^2/cm^3$ to 12 $cm^2/cm^3$.

## 1-2. Supercritical extraction

Thereafter, 64 g of the EVOH strand (EVOH weight after saponification and before extraction, A) was put into a 70 L supercritical extractor, and $CO_2$ was injected to adjust the inside of the extractor to 50 °C and 150 bar. Then, the temperature and pressure were maintained without additional $CO_2$ flow in a steady state for 20 minutes (steady state: no $CO_2$ input to the extractor, no $CO_2$ escaping from the extractor to the separator). Thereafter, $CO_2$ was continuously injected at a rate of 6.5 L/min at 50 °C and 150 bar in a circulation state for another 20 minutes (circulation state: $CO_2$ flows from $CO_2$ reservoir -> extractor -> separator -> $CO_2$ reservoir). This was repeated three times to perform a supercritical extraction process for 120 minutes in total. Thereafter, gas-liquid separation was performed between carbon dioxide and an extract at 50 bar and 40 °C through a separator connected to the supercritical extractor, and gaseous $CO_2$ and liquid methanol were recovered through the gas-liquid separation. The amount of methanol recovered through the supercritical extraction process was 51.939 g (MeOH weight recovered after extraction, C). Thereafter, the supercritical extractor was changed to normal pressure and room temperature (about 20 °C to 23 °C, about 1 bar), and then the ethylene-vinyl alcohol copolymer (EVOH) after dealcoholizing extraction was recovered. At this time, the weight of EVOH was 11.8 g (EVOH weight after extraction, B).

## 1-3. Post-treatment (immersion, drying)

The obtained EVOH was immersed once in a 0.5% aqueous solution of acetic acid for 1 hour, and then immersed in deionized water (DIW) once for 1 hour. Then, it was extruded with an extruder at 90 °C and 120 rpm (moisture content: about 25 wt%), and dried under reduced pressure at 80 °C for 16 hours to prepare EVOH having a moisture content of 0.01 wt%.

## Example 2

The EVOH of Example 2 was prepared by performing the saponification reaction, the supercritical extraction, and the post-treatment in the same manner as in Example 1, except that the temperature and pressure of $CO_2$ were changed to 40 °C and 100 bar as the supercritical carbon dioxide condition in the supercritical extraction process.

## Example 3

The EVOH of Example 3 was prepared by performing the saponification reaction, the supercritical extraction, and the post-treatment in the same manner as in Example 1, except that a cube-shaped EVOH cake with an external surface

area of 6 cm$^2$/cm$^3$ to 8 cm$^2$/cm$^3$ per volume was obtained by draining the EVOH solution into a container or plate after completing the saponification reaction, neutralization and concentration, and cooling it for 6 hours at -5 °C for solidification, followed by a supercritical extraction process.

**Comparative Example 1**

The EVOH of Comparative Example 1 was prepared by performing the saponification reaction, the supercritical extraction, and the post-treatment in the same manner as in Example 1, except that the temperature and pressure of $CO_2$ were changed to 35 °C and 80 bar as the supercritical carbon dioxide condition in the supercritical extraction process.

**Comparative Example 2**

The EVOH of Comparative Example 2 was prepared by performing the saponification reaction, the supercritical extraction, and the post-treatment in the same manner as in Example 1, except that the temperature and pressure of $CO_2$ were changed to 80 °C and 160 bar as the supercritical carbon dioxide condition in the supercritical extraction process.

**<Test Example>**

Physical properties of the ethylene-vinyl alcohol copolymers according to the above Examples and Comparative Examples were measured in the following manner, and the measurement results are shown in Table 1 below.

**(1) MeOH removal rate according to dealcoholizing extraction after saponification**

Regarding the dealcoholizing extraction process after saponification of the ethylene-vinyl acetate copolymer (EVAc) in the presence of an alkali catalyst according to Examples and Comparative Examples, the MeOH recovery rate (%) in the supercritical extraction process after the saponification reaction was determined by measuring the weight of EVOH before supercritical extraction (A), the weight of EVOH after supercritical extraction (B), and the weight of alcohol solvent (MeOH) recovered through supercritical extraction (C) in grams (g), and substituting them into Equation 3 below.

MeOH recovery rate in dealcoholizing supercritical extraction (%) = C / (A-B) $\times$ 100       [Equation 3]

**(2) Residual alkaline component removal rate according to dealcoholizing extraction after saponification**

After saponifying the ethylene-vinyl acetate copolymer (EVAc) in the presence of an alkali catalyst according to Examples and Comparative Examples, a dealcoholizing extraction process was performed, and a removal rate of residual alkaline component such as Na was measured under the following conditions.

Specifically, the alkaline component content (a) of the ethylene-vinyl alcohol copolymer (EVOH) measured before supercritical extraction and the alkaline component content (b) of EVOH measured after supercritical extraction were measured in ppm, and the alkaline component removal rate (%) was calculated as shown in Equation 4 below.

$$[Equation 4]$$

$$\text{Alkaline component removal rate (\%)} = 100 \times (1 - b/a)$$

In addition, the alkaline component content (ppm) can be measured using inductively coupled plasma optical emission spectrometry (ICP-OES) under the following conditions.

- Pre-treatment: microwave digestion, 250 °C, heating for 30 min, 250 °C, maintaining for 15 min (90 bar)
- ICP-OES analysis conditions:

    RF power(W): 1300
    Plasma Gas Flow (L/min): 15
    Aux. Gas flow (L/min): 0.20
    Neb. Gas flow (L/min): 0.80
    Internal Standard: Sc

**(3) Degree of saponification of ethylene-vinyl acetate copolymer**

The degree of saponification (%) of the prepared EVOH can be calculated by a peak integral number ratio of $^1$H-NMR data.

Specifically, an integral value of -OH peak ($\delta$ 4.05-4.72) derived from a vinyl alcohol unit and an integral value of -CH$_3$COO- peak ($\delta$ 1.99) derived from a vinyl acetate unit were obtained from $^1$H-NMR data. And, a percentage (%) of the vinyl alcohol unit to the total of the vinyl alcohol unit and the vinyl acetate unit was calculated to derive the degree of saponification.

**(4) Yellowness index (YI) of ethylene-vinyl acetate copolymer**

After obtaining EVOH pellets by cutting the EVOH prepared in Examples and Comparative Examples with a pelletizer, the pellets were placed in a cell for measurement, and yellowness index (YI) was measured.

[Table 1]

| | | Example 1 | Example 2 | Example 3 | Comparative Example 1 | Comparative Example 2 |
|---|---|---|---|---|---|---|
| Saponifica tion | EVAc ethylene content (mol%) | 32 | 32 | 32 | 32 | 32 |
| | Catalyst addition method | Continuous dropwise addition | Continuous dropwise addition | Continuous dropwise addition | Continuous dropwise addition | Continuous dropwise addition |
| | Catalyst content (wt%) | 1st: 0.27wt% 2nd: 0.53wt% | 1st: 0.27wt% 2nd: 0.53wt% | 1st: 0.27wt% 2nd: 0.53wt% | 1st: 0.27wt% 2nd: 0.53wt% | 1st: 0.27wt% 2nd: 0.53wt% |
| | Gelled/solidified shape | Strand | Strand | Cake | Strand | Strand |
| Dealcoholizing extraction after saponification | Dealcoholization method | Supercritical extraction | Supercritical extraction | Supercritical extraction | Supercritical extraction | Supercritical extraction |
| | Temperature (°C) | 50 | 40 | 50 | 35 | 80 |
| | Pressure (bar) | 150 | 100 | 150 | 80 | 160 |
| | Total time (min) | 120 | 120 | 120 | 120 | 120 |
| | MeOH recovery rate (%) in dealcoholizing extraction | 99.5 | 98.6 | 93.7 | 83 | 99.8 |
| | Na removal rate (%) after dealcoholizing extraction | 30 | 27 | 31 | 19 | 32 |
| Immersion of additives | Compound | Acetic Acid | Acetic Acid | Acetic Acid | Acetic Acid | Acetic Acid |
| | Concentration (%) | 0.5 | 0.5 | 0.5 | 0.5 | 0.5 |
| | Total time (min) | 60 | 60 | 60 | 60 | 60 |
| Degree of saponification of EVOH (%) | | 99.9 | 99.9 | 99.9 | 99.9 | 99.9 |
| Yellowness index (YI) | | 7.9 | 6.7 | 8.9 | 10.1 | 15.2 |

In the present disclosure, after saponifying the ethylene-vinyl acetate copolymer in the presence of an alkali catalyst, a supercritical extraction process was performed at an optimum pressure and temperature. Accordingly, it was possible to minimize the generation of waste liquid and effectively remove by-products such as catalyst residues without complicated equipment such as a multi-stage distillation column, or a pipe mixer and a water tank, and thus an ethylene-vinyl alcohol copolymer (EVOH) with a high degree of saponification could be efficiently obtained without deterioration (yellowing) as shown in Table 1.

Comparing Examples 1, 2 and 3, it was confirmed that a high MeOH recovery rate could be achieved even under the same supercritical carbon dioxide condition when the saponified reaction product was prepared in the form of a strand having a large surface area.

On the other hand, it was confirmed in the results of Comparative Examples 1 and 2 that the MeOH recovery rate dropped significantly to 83% when the pressure and temperature of $CO_2$ were changed to 80 bar and 35 °C. In addition, when the pressure and temperature of $CO_2$ were 160 bar and 80 °C, it was confirmed that the ethylene-vinyl alcohol copolymer (EVOH) was deteriorated and the yellowness index (YI) increased significantly to 15.2.

As described above, the present disclosure performs a supercritical extraction on an ethylene-vinyl alcohol copolymer under optimized conditions, so that it is possible to effectively recover an alcohol solvent such as methanol without using steam or water and deterioration in physical properties of the ethylene-vinyl alcohol copolymer. Accordingly, the alcohol solvent can be reused for the saponification reaction without an additional process of separating water and the alcohol solvent, thereby greatly improving the overall process efficiency.

### Claims

1. A method for preparing an ethylene-vinyl alcohol copolymer, comprising:

    performing a saponification reaction of reacting an ethylene-vinyl acetate copolymer in the presence of an alkali catalyst in an alcohol solvent to produce an ethylene-vinyl alcohol copolymer; and
    extracting the alcohol solvent contained in a saponification reaction product under a supercritical carbon dioxide condition;
    wherein in the supercritical carbon dioxide condition, $CO_2$ has a pressure of 80 bar or more to 150 bar or less, and a temperature of 40°C or more to 60 °C or less.

2. The method for preparing an ethylene-vinyl alcohol copolymer of Claim 1, wherein the saponification reaction is performed by adding a solution of the alkali catalyst dropwise to the ethylene-vinyl acetate copolymer dispersed in the alcohol solvent to react.

3. The method for preparing an ethylene-vinyl alcohol copolymer of Claim 2, wherein the alcohol solvent is at least one selected from the group consisting of methanol, ethanol, propanol, and butanol.

4. The method for preparing an ethylene-vinyl alcohol copolymer of Claim 1, wherein the alkali catalyst is lithium hydroxide, sodium hydroxide, or potassium hydroxide.

5. The method for preparing an ethylene-vinyl alcohol copolymer of Claim 1, wherein a total amount of the alkali catalyst used is 0.01 mole or more to less than 0.03 moles based on 1 mole of vinyl acetate unit of the ethylene-vinyl acetate copolymer.

6. The method for preparing an ethylene-vinyl alcohol copolymer of Claim 1, wherein a temperature of the saponification reaction is 40°C or more to 120 °C or less.

7. The method for preparing an ethylene-vinyl alcohol copolymer of Claim 1, wherein a pressure of the saponification reaction is 1 bar or more to 5 bar or less.

8. The method for preparing an ethylene-vinyl alcohol copolymer of Claim 1, further comprising a step of gelling or solidifying a resultant containing the ethylene-vinyl alcohol copolymer from the saponification reaction.

9. The method for preparing an ethylene-vinyl alcohol copolymer of Claim 1, wherein in the supercritical carbon dioxide condition, $CO_2$ has a pressure of 100 bar or more to 150 bar or less, and a temperature of 40 °C or more to 50 °C or less.

10. The method for preparing an ethylene-vinyl alcohol copolymer of Claim 1, wherein a product containing the ethylene-vinyl alcohol copolymer obtained after the extracting step has the alcohol solvent in an amount of 15 wt% or less based on a total weight of the product.

**11.** The method for preparing an ethylene-vinyl alcohol copolymer of Claim 1, further comprising a step of immersing the ethylene-vinyl alcohol copolymer in an aqueous solution containing a carboxylic acid, and then drying to remove water, after the extracting step.

**Patentansprüche**

**1.** Verfahren zur Herstellung eines Ethylen-Vinylalkohol-Copolymers, umfassend:

Durchführen einer Verseifungsreaktion, bei der ein Ethylen-Vinylacetat-Copolymer in Gegenwart eines Alkalikatalysators in einem Alkohol-Lösungsmittel umgesetzt wird, um ein Ethylen-Vinylalkohol-Copolymer herzustellen; und
Extrahieren des in einem Verseifungsreaktionsprodukt enthaltenen Alkohol-Lösungsmittels unter Bedingungen für überkritisches Kohlendioxid;
wobei unter den Bedingungen für überkritisches Kohlendioxid $CO_2$ einen Druck von 80 bar oder mehr bis 150 bar oder weniger und eine Temperatur von 40 °C oder mehr bis 60 °C oder weniger aufweist.

**2.** Verfahren zur Herstellung eines Ethylen-Vinylalkohol-Copolymers gemäß Anspruch 1, wobei die Verseifungsreaktion durchgeführt wird, indem eine Lösung des Alkalikatalysators tropfenweise zu dem in dem Alkohol-Lösungsmittel dispergierten Ethylen-Vinylacetat-Copolymer gegeben wird, um zu reagieren.

**3.** Verfahren zur Herstellung eines Ethylen-Vinylalkohol-Copolymers gemäß Anspruch 2, wobei das Alkohol-Lösungsmittel mindestens eines ist, das ausgewählt ist aus der Gruppe bestehend aus Methanol, Ethanol, Propanol und Butanol.

**4.** Verfahren zur Herstellung eines Ethylen-Vinylalkohol-Copolymers gemäß Anspruch 1, wobei der Alkalikatalysator Lithiumhydroxid, Natriumhydroxid oder Kaliumhydroxid ist.

**5.** Verfahren zur Herstellung eines Ethylen-Vinylalkohol-Copolymers gemäß Anspruch 1, wobei die Gesamtmenge des verwendeten Alkalikatalysators 0,01 Mol oder mehr bis weniger als 0,03 Mol, bezogen auf 1 Mol Vinylacetateinheit des Ethylen-Vinylacetat-Copolymers, beträgt.

**6.** Verfahren zur Herstellung eines Ethylen-Vinylalkohol-Copolymers gemäß Anspruch 1, wobei die Temperatur der Verseifungsreaktion 40 °C oder mehr bis 120 °C oder weniger beträgt.

**7.** Verfahren zur Herstellung eines Ethylen-Vinylalkohol-Copolymers gemäß Anspruch 1, wobei der Druck der Verseifungsreaktion 1 bar oder mehr bis 5 bar oder weniger beträgt.

**8.** Verfahren zur Herstellung eines Ethylen-Vinylalkohol-Copolymers gemäß Anspruch 1, ferner umfassend einen Schritt, bei dem ein aus der Verseifungsreaktion resultierendes Produkt, das das Ethylen-Vinylalkohol-Copolymer enthält, geliert oder verfestigt wird.

**9.** Verfahren zur Herstellung eines Ethylen-Vinylalkohol-Copolymers gemäß Anspruch 1, wobei unter den Bedingungen für überkritisches Kohlendioxid $CO_2$ einen Druck von 100 bar oder mehr bis 150 bar oder weniger und eine Temperatur von 40 °C oder mehr bis 50 °C oder weniger aufweist.

**10.** Verfahren zur Herstellung eines Ethylen-Vinylalkohol-Copolymers gemäß Anspruch 1, wobei ein Produkt, das das nach dem Extraktionsschritt erhaltene Ethylen-Vinylalkohol-Copolymer enthält, das Alkohol-Lösungsmittel in einer Menge von 15 Gew.-% oder weniger, bezogen auf das Gesamtgewicht des Produkts, aufweist.

**11.** Verfahren zur Herstellung eines Ethylen-Vinylalkohol-Copolymers gemäß Anspruch 1, ferner umfassend einen Schritt, bei dem das Ethylen-Vinylalkohol-Copolymer nach dem Extraktionsschritt in eine wässrige Lösung, die eine Carbonsäure enthält, eingetaucht und dann getrocknet wird, um Wasser zu entfernen.

**Revendications**

**1.** Procédé de préparation d'un copolymère d'éthylène-alcool vinylique, comprenant :

la réalisation d'une réaction de saponification consistant à faire réagir un copolymère d'éthylène-acétate de vinyle en présence d'un catalyseur alcalin dans un solvant alcoolique afin de produire un copolymère d'éthylène-alcool vinylique ; et

l'extraction du solvant alcoolique contenu dans un produit de réaction de saponification dans des conditions de dioxyde de carbone supercritique ;

dans lequel, dans les conditions de dioxyde de carbone supercritique, le CO2 a une pression de 80 bars ou plus à 150 bars ou moins, et une température de 40 °C ou plus à 60 °C ou moins.

2. Le procédé de préparation d'un copolymère d'éthylène-alcool vinylique selon la revendication 1, dans lequel la réaction de saponification est effectuée en ajoutant goutte à goutte une solution du catalyseur alcalin au copolymère d'éthylène-acétate de vinyle dispersé dans le solvant alcoolique pour le faire réagir.

3. Le procédé de préparation d'un copolymère d'éthylène-alcool vinylique selon la revendication 2, dans lequel le solvant alcoolique est au moins un solvant choisi dans le groupe constitué par le méthanol, l'éthanol, le propanol et le butanol.

4. Le procédé de préparation d'un copolymère d'éthylène-alcool vinylique selon la revendication 1, dans lequel le catalyseur alcalin est l'hydroxyde de lithium, l'hydroxyde de sodium ou l'hydroxyde de potassium.

5. Le procédé de préparation d'un copolymère d'éthylène-alcool vinylique selon la revendication 1, dans lequel la quantité totale de catalyseur alcalin utilisée est de 0,01 mole ou plus et inférieure à 0,03 mole par mole d'unité d'acétate de vinyle du copolymère d'éthylène-acétate de vinyle.

6. Le procédé de préparation d'un copolymère d'éthylène-alcool vinylique selon la revendication 1, dans lequel la température de la réaction de saponification est de 40 °C ou plus à 120 °C ou moins.

7. Le procédé de préparation d'un copolymère d'éthylène-alcool vinylique selon la revendication 1, dans lequel la pression de la réaction de saponification est de 1 bar ou plus à 5 bars ou moins.

8. Le procédé de préparation d'un copolymère d'éthylène-alcool vinylique selon la revendication 1, comprenant en outre une étape de gélification ou de solidification d'un produit résultant contenant le copolymère d'éthylène-alcool vinylique issu de la réaction de saponification.

9. Le procédé de préparation d'un copolymère d'éthylène-alcool vinylique selon la revendication 1, dans lequel, dans les conditions de dioxyde de carbone supercritique, le $CO_2$ a une pression de 100 bars ou plus à 150 bars ou moins, et une température de 40 °C ou plus à 50 °C ou moins.

10. Le procédé de préparation d'un copolymère d'éthylène-alcool vinylique selon la revendication 1, dans lequel un produit contenant le copolymère d'éthylène-alcool vinylique obtenu après l'étape d'extraction a le solvant alcoolique en une quantité de 15 % en poids ou moins par rapport au poids total du produit.

11. Le procédé de préparation d'un copolymère d'éthylène-alcool vinylique selon la revendication 1, comprenant en outre une étape consistant à immerger le copolymère d'éthylène-alcool vinylique dans une solution aqueuse contenant un acide carboxylique, puis à sécher pour éliminer l'eau, après l'étape d'extraction.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006258803 A